Europäisches Patentamt

European Patent Office

Office européen des brevets

(19)

(11) Publication number: **0 209 467**
**A2**

(12) **EUROPEAN PATENT APPLICATION**

(21) Application number: **86401614.2**

(22) Date of filing: **18.07.86**

(51) Int. Cl.⁴ **G06K 11/06**

(30) Priority: **18.07.85 US 756878**

(43) Date of publication of application:
**21.01.87 Bulletin 87/04**

(84) Designated Contracting States:
**DE FR GB IT NL**

(71) Applicant: **SCHLUMBERGER SYSTEMS INC.**
**32 Second Avenue**
**Burlington Massachusetts 01803(US)**

(72) Inventor: **Akodes, Boris**
**159 Main Street Apt. 39A**
**Stoneham Massachusetts 02180(US)**

(74) Representative: **Monod, Jean-Yves**
**GIERS SCHLUMBERGER 12 Place des**
**Etats-Unis**
**F-92124 Montrouge Cédex(FR)**

(54) **Improved stylus for use with digitizer tablets.**

(57) A stylus for use with a digitizer tablet of a computerized system includes a solid state sensor mounted to an internal printed circuit board and a magnet mounted to move relative to the sensor in response to the application of pressure upon the stylus tip. Preferably, a single printed circuit board is utilized which includes preamplifier circuitry adjacent the stylus tip. A separate ground contact clip is preferably included to preserve signal strength and consistency. Enhancements to stylus performance include increased efficiency, reliability and multiple stroke symbol recognition capability.

Fig.5

EP 0 209 467 A2

## IMPROVED STYLUS FOR USE WITH DIGITIZER TABLETS

Field of the Invention

This invention relates to styli or electrical pens designed for use with digitizer tablets in sending commands and data to a computer system.

Discussion of the Technical Problem

It is now well known to employ a stylus or electrical pen with a digitizer tablet in sending data and commands to a computer system, e.g., a CAD/CAM system. Conventionally, a stylus or "pen" includes a grounded outer cylindrical sleeve within which there is positioned an "ink cartridge" having an extending pen tip at one end and a printed circuit board secured to an electrical cable at the other end. The printed circuit board generally includes preamplifier circuitry to amplify the signal received by the pen tip and transmitted along the metal case of the ink cartridge. A mechanical contact switch and a spring-shaped electrical connector are mounted between the ink cartridge and the board to indicate pressure on the tip and to electrically connect the tip and preamplifier circuitry, respectively.

In a common mode of operation with pen and digitizer tablet, a signal is regularly strobed across the grid work of conductors embedded within the digitizer tablet. The signals from adjacent conductors are sequentially received by the pen through capacitive coupling and the system determines the location of the pen tip relative to the digitizer tablet by identifying the source of the maximum valued signal received by the pen tip. However, before a cursor on the CRT is activated to move in response to the pen location, a proximity determination is first made. To this end the system determines whether the maximum value signal exceeds a predetermined threshold value, to indicate that the pen tip is sufficiently near to the tablet to assume that a user intends to input information into the system. After the pen tip is brought sufficiently close to the tablet to cause the system to move the cursor in response to pen movement, the user can then position the cursor in a desired screen location to issue commands or input data. After positioning the cursor, the sytem is signaled that an input is about to follow by pressing the pen tip to the tablet to close a switch in the pen. Pen movements accomplished while the pen tip is under pressure are understood by the system to be inputs of commands or data rather than relocations of the cursor.

While the above-described pen design proved useful for many applications, it was found to limit a user's ability to communicate with the system through rapid and/or multiple pen stroke symbols on the digitizer tablet. An investigation into the problem revealed a number of factors which contributed to the shortcomings of the prior design. First, reliance upon the moving mechanical contact between the pen tip and the preamplifier resulted in a less than optimum connection which acted as a source of noise in the system, with momentary losses of connection producing "spikes" on the terminal screen and making multiple symbol recognition unreliable. In addition, the use of a mechanical switch to indicate a pressure condition proved to be less than optimally reliable. For example, corrosion between contacts could render the pen non-operational.

Secondly, a lack of uniformity in signal pick-up was identified. The signal coupled into the stylus depends upon the difference between the signals induced in the tip of the stylus versus the signal induced in the ground contact (formerly the outer sleeve), which in turn depends upon the respective distances of the two from the tablet. In the prior stylus, when the pen tip is pressed to the tablet, the distance between tip and tablet becomes approximately the distance between the outer sleeve and the tablet. This results in a low signal value being sent to the preamplifier circuitry at the precise time that commands were being issued, thereby causing difficulties during multiple stroke symbol recognition. In addition, this caused the proximity determination to vary between the in-pressure and out-of-pressure positions.

Finally, the prior stylus required that the signal induced by the tablet be coupled through the ink cartridge before reaching the first stage of the preamplifier circuitry. This condition also resulted in small signal values and a low signal-to-noise ratio.

It was recognized that a stylus design which eliminated the above limitations would significantly improve the reliability and usefulness of stylus/digitizer tablet input systems.

Summary of the Invention

The present invention provides an improved stylus design for use with digitizer tablets in inputting commands and information into a computerized system. The improved stylus design provides improved physical reliability, signal consistency, proximity determination and signal to noise ratio, which translate to the user as improved efficiency and multiple symbol recognition capabilities.

The stylus according to the present invention includes an outer sleeve member adapted to be held by the user and a pen tip adapted for contacting the working surface of a digitizer tablet, the pen tip being connected near one end of the outer sleeve and extending therefrom. A solid state sensing element is mounted within the outer sleeve, and a sensed member is mounted within the outer sleeve in proximity to the sensor with the sensor and sensed member being movable relative to one another in response to the application of pressure upon the pen tip to produce an electrical condition at the sensor.

Preferably the stylus includes only a single printed circuit board which includes preamplifier circuitry positioned in proximity to the pen tip to improve signal strength and signal-to-noise ratio. Preferably, the sensor and all other electrical circuitry are mounted in a stationary manner on the printed circuit board, with the sensed member being a magnet which is movably mounted on the outer sleeve. In this way, electrical noise is reduced because all the electrical elements of the stylus remain stationary. Further, it is preferred that a separate ground contact clip be secured within the outer sleeve in a position fixed relative to the pen tip, to assure consistent proximity determinations and a uniform high level of signal strength.

Brief Description of the Figures

Figure 1 is a perspective view of computer aided design workstation illustrating one common environment for use of the stylus of the present invention.

Figure 2 is a simplified sectional view of the stylus of the present invention.

Figure 3 is a perspective view of a single printed circuit board housed within the stylus of the present invention.

Figure 4 is a perspective view similar to the view of Figure 3, illustrating a preferred positioning of the printed circuit board relative to other elements of the stylus of the present invention.

Figure 5 is a detailed sectional view of the assembled stylus according to the present invention.

Figure 6 is a schematic diagram representing electrical circuitry utilized in the stylus of the present invention.

Description of the Preferred Embodiment

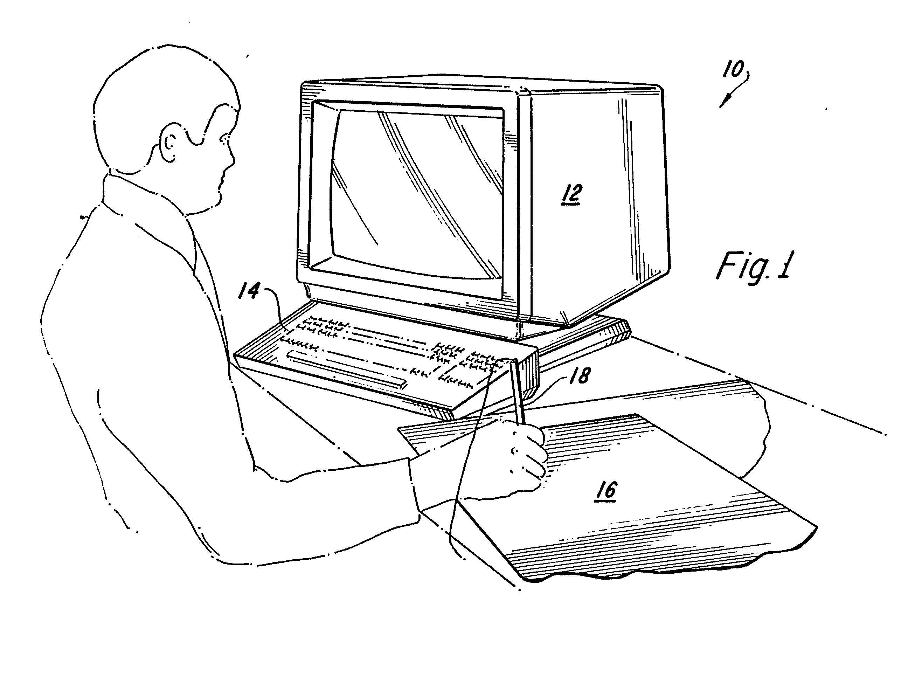

With reference to Figure 1, there is shown a CAD/CAM system 10 including among other elements, a CRT 12, an alphanumeric key board 14, a digitizer tablet 16 and a stylus 18 for use therewith, all of which are coupled to and communicate with a host computer system (not shown). As discussed above, data and commands can be conveniently introduced to the system through stylus 18 and digitizer tablet 16, with the user controlling cursor location after bringing the pen 18 within a predetermined proximity of the tablet 16, and thereafter issuing directives by applying pressure to the tip of pen 18.

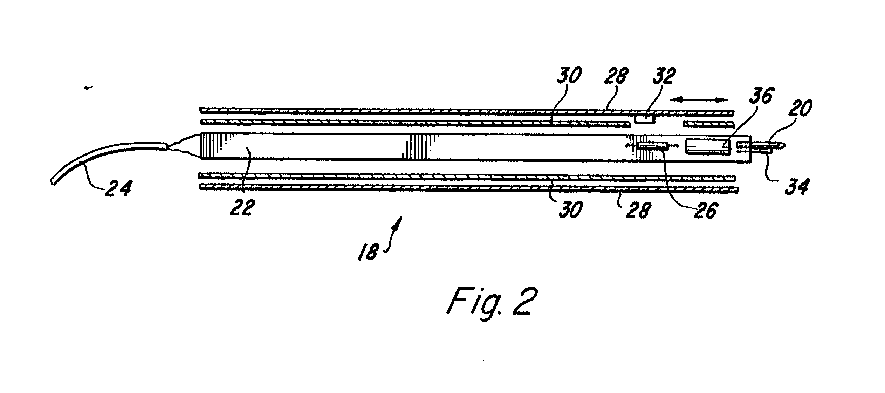

With reference also to Figure 2, a simplified sectional view of the stylus 18 of the present invention is shown, including a pen tip 20 mounted to a single printed circuit board 22 which is electrically connected to an electrical cable 24. A solid state sensor 26 is mounted to the board 22 to serve as a contactless switch to indicate when pressure is applied to the pen tip 20 during use. Although not limiting to the invention, sensor 26 is preferably a Hall Effect device, of the type commercially available from the Microswitch Division of Honeywell, Inc. as Model # 613884.

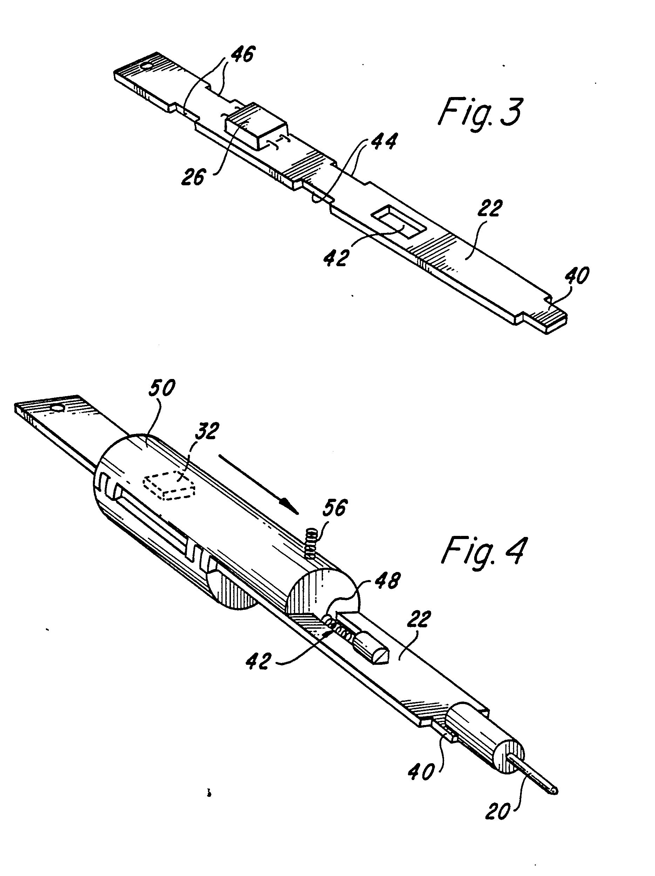

The above-described tip/board/cable assembly is conveniently mounted within an outer sleeve 28 and an intermediate electrical shield member 30 in a manner which permits a limited degree of longitudinal movement between the sleeve 28 and the tip/board/cable assembly. A magnet 32 is secured to move with sleeve 28 and is positioned in proximity to sensor 26 such that movement of magnet 32 relative to sensor 26 generates an electrical condition which is useful to indicate the application of pressure upon pen tip 20. More details of the physical implementation of this design are illustrated in Figures 3, 4 and 5, and will be more fully described below.

The novel stylus design shown in Fig. 2 provides a number of important advantages over prior stylus designs. A major benefit flows directly from fixing the position of the board 22 relative to the pen tip, such that all electrical elements and connections remain unmoved during use of stylus 18, thereby eliminating a major source of noise in prior stylus designs. In addition, use of the sensor 26 and the magnet 32 to form a contactless switch which takes the place of contact-dependent switches in prior designs enhances reliability. By securing magnet 32 to sleeve 28 and providing that the sleeve/magnet assembly, which is only moving parts of stylus 18, does not carry any electrical connections, substantial improvements in reliability and recognition capability results. Previously experienced noise due to movement of the electrical connections is eliminated and contact unreliability which caused "spikes" on the CRT is eliminated to enhance multiple stroke symbol recognition capabilities of the system. In addition, the need for a moving connection extending between the printed circuit board and ink cartridge which is subjected to friction contact is eliminated, thereby further improving reliability of the stylus.

Of course the invention is not limited to the use of a Hall Effect sensing device, inasmuch as it is known in the art that alternative solid state magnetic sensing devices such as a reed relay may be utilized. Further, it should be clear that the invention is not limited to magnetic sensing devices, in that a photosensor could be positioned upon the board 22 and a light source, e.g., an LED or an opening to ambient light, could be positioned on the outer sleeve 28.

A further benefit provided by the novel design of Fig. 2 results from the mounting of a ground clip 34 within stylus 18 adjacent pen tip 20. Through this simple and elegant mechanism, the signal supplied to the preamplifier circuitry remains of substantially the same strength for both tip-pressure and non-tip-pressure conditions and proximity determinations likewise do not vary when pressure changes. As discussed above, the prior stylus design utilized outer sleeve 28 as the ground contact which resulted in a lower signal value being received at the preamplifier circuitry when the pen tip was under pressure. The reduced signal strength caused problems with multiple stroke symbol recognition and also caused the proximity value to differ between the in-pressure and out-of-pressure conditions. These problems are conveniently eliminated in the stylus of the present invention by mounting a ground contact clip 34 in a position which does not move relative to the pen tip 20.

A third benefit of the present stylus design flows from the positioning of the preamplifier circuitry 36 upon board 22 in close proximity to the pen tip 20, thereby assuring that sufficiently high signal values are received and that an improved signal-to-noise ratio is attained. In prior stylus designs which utilized an ink cartridge and printed circuit boards, signals from the pen tip had to be coupled through the ink cartridge and spring wire before reaching the first stage of the preamplifier circuitry. The present design resolves such prior art limitations, by preferably position the input stage of the preamplifier circuitry within one inch of the pen tip 18, and more preferably within about one-fourth inch.

With reference now to Figures 3, 4 and 5, a more detailed description of the preferred embodiment of the present stylus will be provided. Fig. 3 shows the general shape of the preferred printed circuit board 22, including a narrowed end section 40, a central opening 42, and two pairs of edge indentations 44 and 46 between which sensor 26 is mounted on the upper face of board 22.

As shown in Fig. 4, pen tip 20 is adapted to fit upon narrowed end section 40; a spring assembly 48 conveniently rests within central opening 42, and a magnet housing 50 is positionable around the board 22 adjacent sensor 26, with edge indentation pairs 44 and 46 functioning to control relative movement between magnet housing 50 and board 22 in cooperation with spring assembly 48. Magnet is secured within magnet housing 50 and moves with it relative to sensor 26 to provide an electrical condition indicative of pressure upon pen tip 20.

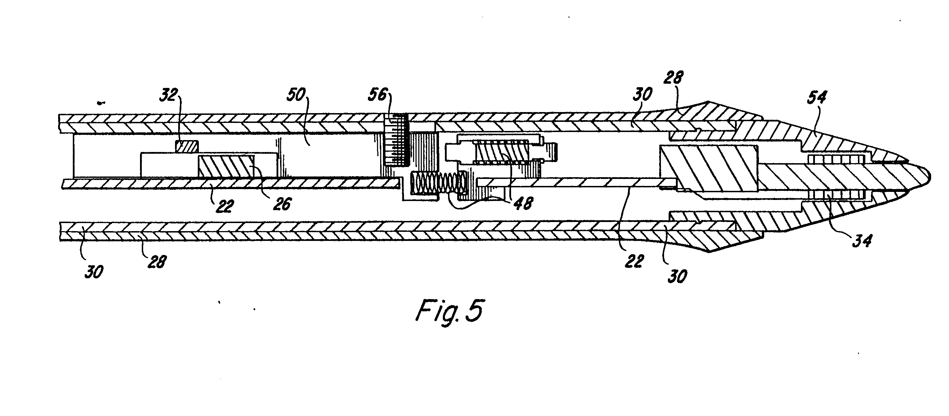

As shown in Fig. 5, the assembly of Fig. 4 is mounted within stationary electrical shield 30, a head member 54 adjacent pen tip 20, and outer sleeve 28, with magnet housing 50 fixed to sleeve 28 by a set screw 56. Ground clip 34 is mounted within head member 54 and is electrically connected to board 22 to provide a mechanically stationary ground contact connection.

As can be appreciated from a review of Fig. 5, when pressure is applied to the pen tip 20, outer sleeve 28, magnet housing 50 and magnet 32 move forward a limited distance against the resistive spring action of spring assembly 48. Relative movement between magnet 32 and sensor 26 produces the electrical condition indicative of the in-pressure state. The initial position of magnet 32 relative to sensor 26 is adjustable within limits to control the sensitivity of sensor 26 to pressure applied on pen tip 20.

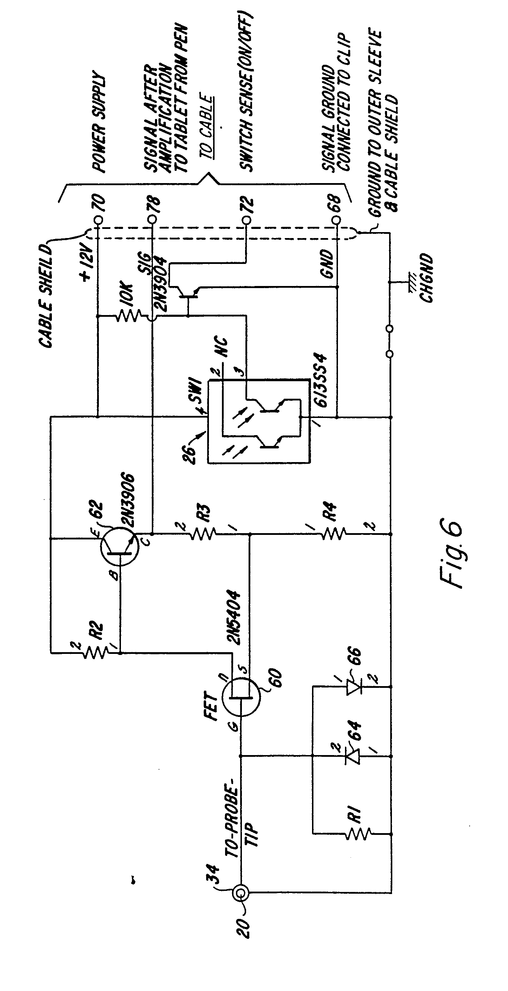

With reference to Fig. 6, a schematic of the electrical circuitry on board 22 is shown. Pen tip 20 is connected to preamplifier circuitry including FET 60 and transistor 62 with supporting resistor network R2, R3, R4; with resistor R1 supplied as a bleed resistor to protect against static charge build-up and diode pair 64 and 66 supplied to protect from an overload at the input of the preamplifier circuitry.

Hall Effect sensor 26 has one terminal connected to signal ground wire 68 and a second terminal connected to power supply wire 70. The output of sensor 26 is shown at wire 72 and indicates the ON/OFF (Pressure/No Pressure) condition of the contactless switch.

Ground clip 34 is shown as surrounding pen tip 20 and is connected to signal ground wire 68.

A cable shield 74 is connected to electrical shield 30 as illustrated in dotted lines surrounding connections to the cable 24, which include power supply wire 70, preamplifier output signal 78, sensor output 72, and signal ground 68. Optionally, signal ground 68 may be electrically connected to electrical shield 30 in applications where signal ground 68 should be connected to system ground.

Measurements made of the prior stylus design resulted in a signal-to-noise ratio of about 0.1 (or -20db.). Comparable measurements of the preferred embodiment of the present invention resulted in a signal to noise ratio of about 20.0 (or +26db.). This substantial increase in S/N ratio yields much improved efficiency and multiple stroke symbol recognition capabilities to the user of the system.

The reader will recognize that the preceeding description of the preferred embodiment of the invention is not intended to limit the scope of the invention, inasmuch as the scope of the invention is more specifically defined by the claims which follow.

### Claims

1. A stylus adapted for use with the digitizer tablet of a computerized system, comprising:

a stylus outer sleeve member adapted to be held by a user;

a tip adapted for contacting the working surface of a digitizer tablet, said tip connected adjacent a first end of the outer sleeve member and extending therefrom;

a solid state sensing element mounted within said outer sleeve member; and

a sensed member associated with said outer sleeve member in proximity to said sensing element, said sensed member and said sensing element mounted to be movable relative to one another in response to the application of pressure upon said tip, whereby said sensing element produces an electrical condition in response to said relative position.

2. The stylus as set forth in Claim 1, further comprising:

means for receiving electrical signals from said digitizer tablet from which the position of said tip relative to the digitizer tablet is determinable by the system.

3. The stylus as set forth in Claim 2, further comprising:

a printed circuit board mounted within said sleeve member and containing electrical circuitry for operating upon the electrical signals received by said receiving means.

4. The stylus as set forth in Claim 3, further comprising:

a ground member mounted within said outer sleeve member in a position fixed relative to said tip during relative movement between said sensed member and said sensing element.

5. The stylus as set forth Claim 4, wherein said electrical circuitry includes preamplifier circuitry, wherein said preamplifier circuitry is mounted on said printed circuit board in proximity to said tip.

6. The stylus as set forth in Claim 3, wherein said sensing element is mounted on said printed circuit board in a stationary manner and wherein said sensed member is a magnet mounted to said outer sleeve member to move relative to said sensing element in response to the application of pressure upon said tip.

7. The stylus as set forth in Claim 6, wherein said sensing element is a Hall Effect device.

8. The stylus as set forth in Claim 7, wherein said sleeve printed circuit board is mounted in a fixed position relative to said tip.

9. The stylus as set forth in Claim 8, further comprising spring return means adapted to bias said magnet from an in-pressure toward an out-of-pressure position.

10. A stylus adapted for use with the digitizer tablet of a computerized system, comprising:

a stylus outer sleeve member to be held by a user;

a stylus tip adapted for contacting the working surface of a digitizer tablet, said stylus tip connected adjacent a first end of the outer sleeve member and extending therefrom;

electrical circuitry mounted within said outer sleeve member in a fixed position relative to said stylus tip; and

displacement sensing means coupled to said outer sleeve member and said stylus tip to generate an electrical condition in response to relative position between said outer sleeve member and said stylus tip.

0 209 467

Fig.1

Fig. 2

0 209 467

Fig.3

Fig.4

*Fig. 5*

POWER SUPPLY

SIGNAL AFTER AMPLIFICATION TO TABLET FROM PEN

TO CABLE

SWITCH SENSE (ON/OFF)

SIGNAL GROUND CONNECTED TO CLIP

GROUND TO OUTER SLEEVE & CABLE SHIELD

+12V

SIG

2N3904

GND

CHGND

CABLE SHEILD

10K

70

78

72

68

NC

SW1

613SS4

26

2N3906

62

R3

R4

R2

2N5404

FET

60

66

64

R1

TO-PROBE-TIP

34

20

Fig. 6